# FASCICULE DE BREVET EUROPEEN

(11) **EP 1 435 309 B1**
(45) Date de publication et mention de la délivrance du brevet: **13.04.2016**
(21) Numéro de dépôt: 03290293.4
(22) Date de dépôt: 05.02.2003
(51) Int. Cl.: B60P 1/28

(54) **Caisse pour un véhicule industriel, procédé de fabrication d'une telle caisse et véhicule industriel comportant une telle caisse**
Wagenkasten eines Industriefahrzeuges, Verfahren zu seiner Herstellung und Industriefahrzeug mit so einem Wagenkasten
Body for an industrial vehicle, manufacturing process for such a body and industrial vehicle with such a body

(30) Priorité: 20.12.2002 FR 0216419
(43) Date de publication de la demande: 07.07.2004
(73) Titulaire: BENALU, 62800 Lievin (FR)
(72) Inventeur: Gressier, Christophe, 59251 Allennes les Marais (FR)
(74) Mandataire: Matkowska, Franck

(56) Documents cités:
- EP-A- 0 179 962
- EP-A- 1 044 867
- DE-U- 7 435 770
- DE-U- 20 003 051
- GB-A- 1 431 764
- US-A- 1 627 336
- US-A- 2 886 374

## Description

L'invention concerne une caisse pour un véhicule industriel telle que divulguée dans le document EP 0179962 A1, un procédé de fabrication d'une telle caisse et un véhicule industriel comportant une telle caisse.

Dans le cadre de la présente invention, le terme « véhicule industriel » désigne indifféremment un camion-porteur, une remorque et une semi-remorque. Et le terme « caisse » désigne indifféremment tout type de réceptacle destiné à être monté pour bennage autour d'un axe soit parallèle, soit transversal par rapport à l'étendue longitudinale de la caisse, ou en position fixe et tout réceptacle destiné à être posé, pour les seuls besoins de son déplacement, sur un châssis porte-conteneur ou équivalent.

Une caisse comprend un fond, des parois latérales respectivement droite et gauche, une paroi avant et une paroi arrière, les qualificatifs avant, arrière, droite et gauche étant à comprendre par rapport au sens de la marche avant d'un véhicule sur lequel la caisse est installée.

Les caisses sont fabriquées habituellement à partir de tôles d'acier ou d'aluminium de différentes épaisseurs. Afin de les rendre résistantes aux contraintes auxquelles elles sont soumises aussi bien pendant leur chargement que pendant le transport de leur charge, le fond et les parois latérales sont renforcés respectivement par des profilés transversaux et des profilés verticaux. Et lorsqu'une caisse a une section transversale en U ou semi-circulaire, ce renforcement est obtenu moyennant des profilés en forme d'arceaux. Tous ces profilés sont soudés sur les tôles. Une partie des soudures peut être effectuée avec des robots de soudure alors que d'autres soudures doivent être effectuées manuellement. Dans un cas comme dans l'autre, le soudage entraîne une déformation des tôles et par cela une usure accélérée des parois de la caisse.

Le but de l'invention est de remédier aux inconvénients mentionnés ci-avant par une caisse dont les parois sont nettement moins sujettes à des déformations causées par le soudage.

Le but de l'invention est atteint par une caisse pour un véhicule industriel, comprenant un fond essentiellement plan et supporté par des traverses, ainsi que deux parois latérales respectivement droite et gauche.

Conformément à l'invention, la caisse a une section transversale essentiellement rectangulaire et chacune des parois latérales comprend un profilé longitudinal soudé sur les extrémités correspondantes des traverses. Le profilé longitudinal de la paroi gauche est donc soudé sur les extrémités gauches des traverses et, de manière analogue, le profilé longitudinal de la paroi droite est soudé sur les extrémités droites des traverses.

Les parois latérales peuvent être formées par un profilé longitudinal unique ou par plusieurs profilés longitudinaux superposés assemblés par soudage le long de leurs bords longitudinaux.

Chacun des deux profilés longitudinaux fixé sur les extrémités correspondantes des traverses a une section transversale approximativement trapézoïdale et est plus large en bas qu'en haut, dans la position de montage du profilé. De plus, chacun de ces deux profilés présente dans sa partie inférieure, tel qu'il est fixé sur les traverses, deux surfaces de soudage contiguës qui enferment entre elles un angle approximativement droit dans lequel s'insèrent les extrémités correspondantes des traverses pour y être fixées par soudage. Chacun de ces deux profilés longitudinaux est donc soudé par une de ses deux surfaces de soudage sur les faces supérieures, en général horizontales, des traverses, et par l'autre surface de soudage sur des faces d'extrémité généralement verticales des traverses. Il est précisé que le fond de la caisse selon l'invention est supporté par des traverses dont les sections transversales peuvent avoir différentes formes. Ainsi, les traverses peuvent être, par exemple, des profilés en U ayant une section transversale rectangulaire ou ayant une section transversale arrondie ; elles peuvent également être des tubes cylindriques ayant une section transversale circulaire ou ayant une section transversale ovale. En conséquence, les faces supérieures des traverses mentionnées plus haut ne présentent pas systématiquement une surface de soudure qui prendrait appui sur une surface de soudage correspondante de l'un ou l'autre des deux profilés longitudinaux. Dans le cas de traverses formées par des profilés en U, par exemple, la face supérieure des traverses est constituée par les deux bords supérieurs de ces profilés. La soudure se fait alors sur chaque profilé longitudinal le long du premier de ces deux bords de la traverse, ensuite le long le bord en U de la face d'extrémité de la traverse et enfin le long du second de ces deux bords de la traverse.

Lorsque les parois transversales sont constituées par plusieurs profilés, un des profilés, qui n'est pas celui fixé sur les extrémités des traverses, peut avoir, au moins en partie, la forme d'une tôle légèrement roulée vers l'intérieur de la caisse. Chacune des parois latérales comprend par ailleurs un profilé creux formant des rives supérieures de la caisse. Ce profilé creux peut être un profilé individuel soudé sur le profilé contigu. Et il peut aussi être intégré dans le profilé unique formant une paroi latérale ou, dans le cas d'une pluralité de profilé formant la paroi, intégré dans le profilé contigu.

Grâce à la conception de la caisse de l'invention selon laquelle chacune des parois latérales est formée par un ou plusieurs profilés longitudinaux, la caisse est exempte d'éléments raidisseurs verticaux.

Afin de pouvoir résister aux efforts latéraux susceptibles d'agir sur chacune des parois latérales, le profilé unique, ou l'ensemble des profilés constituant une paroi latérale, présente une face intérieure légèrement courbée vers l'intérieur de la caisse.

Egalement grâce à cette conception selon l'invention, le profilé unique, ou l'ensemble des profilés, formant une paroi latérale, présente une face extérieure au moins approximativement plane et essentiellement perpendiculaire à un plan correspondant au fond de la caisse.

D'autres caractéristiques et avantages de l'invention ressortiront de la description ou d'un mode de réalisation et de ses variantes décrit ci-après en référence aux dessins. Dans ces dessins :
La figure 1 montre une caisse selon l'invention dans une vue en perspective d'en haut.
La figure 2 montre la partie avant d'une caisse selon l'invention dans une vue en perspective par en dessous.
La figure 3 montre une vue en coupe transversale d'une caisse selon l'invention.
La figure 4 montre par extrait de la figure 3 l'assemblage de l'un des deux côtés de la caisse.
Les figures 5 et 6 montrent des variantes d'une paroi latérale de la caisse de la figure 3.
La figure 7 montre une vue en perspective à partir du côté arrière gauche de la caisse de l'invention.
La figure 8 montre un véhicule industriel, sous la forme d'une semi-remorque, comportant une caisse selon l'invention.
La figure 9 montre une variante de l'assemblage représenté sur la figure 4.

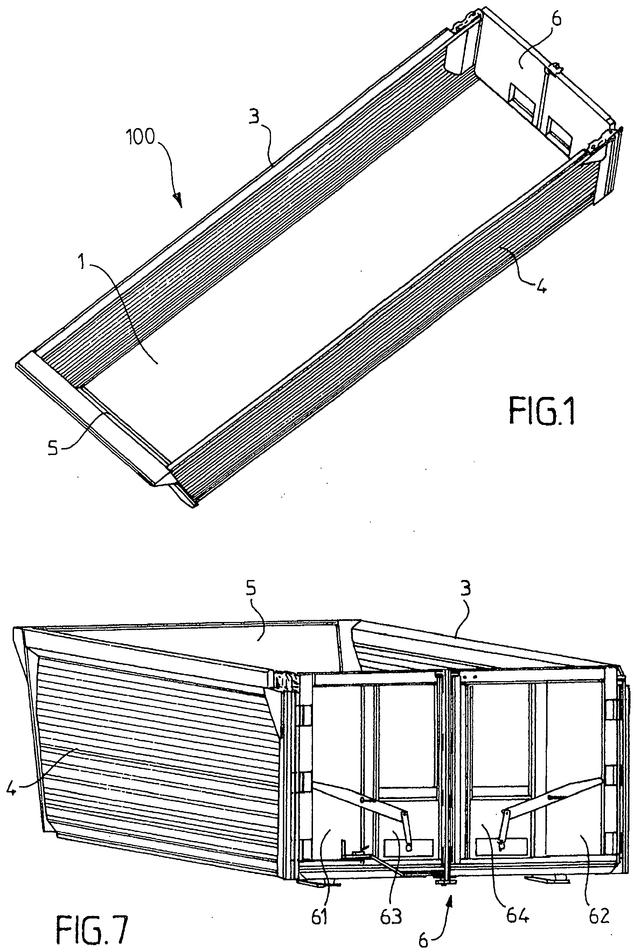

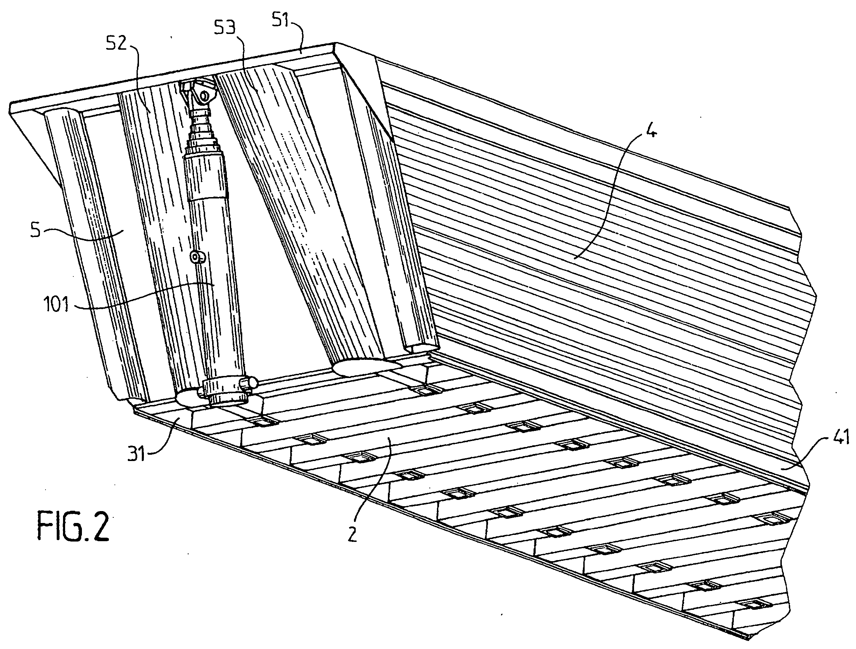

Selon les figures 1 et 2, une caisse selon l'invention comprend un fond 1 essentiellement plan et supporté par des traverses 2 ainsi que deux parois latérales respectivement droite 3 et gauche 4, une paroi avant 5 et une paroi arrière 6.

La paroi avant 5 est constitué par une tôle inclinée vers l'avant et pourvue d'un profilé 51 constituant à la fois la rive avant de la caisse et une casquette de protection de la tête du vérin. La paroi avant 5 présente une face intérieure essentiellement plane et est renforcée, sur sa face extérieure, par deux éléments en saillie 52 et 53. Les éléments 52, 53 sont des tôles roulées de forme tronconique. Toutefois, les éléments 52, 53 peuvent aussi avoir une forme cylindrique.

La paroi arrière 6 est constituée par une porte basculante ayant deux vantaux 61, 62 dont chacun est pourvu d'un portillon référencé respectivement 63, 64, comme cela est représenté sur la figure 7. Il va sans dire que la paroi arrière peut tout aussi bien être une paroi sans ouverture comme les parois latérales ou la paroi avant ou être pourvu de tout autre type d'ouverture que d'une porte basculante, sans sortir du cadre de la présente invention.

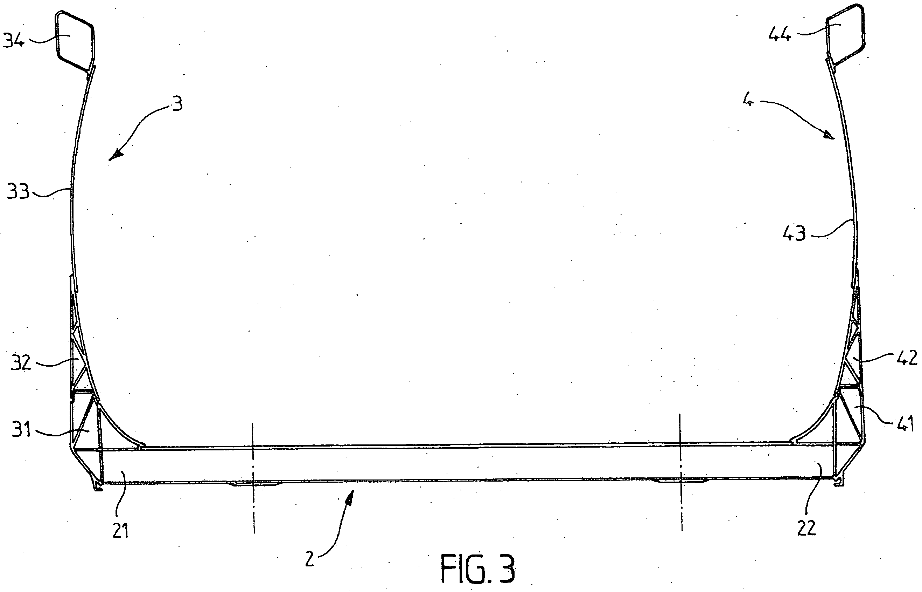

La caisse selon l'invention a une section transversale essentiellement rectangulaire, comme cela est représenté sur la figure 3. Chacune des parois latérales 3, 4 comprend quatre profilés longitudinaux dont un est soudé sur les extrémités correspondantes des traverses 2 et dont les autres profilés longitudinaux se superposent l'un sur l'autre. Ainsi, la paroi latérale droite 3 comprend un profilé longitudinal 31 ayant une section transversale approximativement trapézoïdale dont la base inférieure est plus large que la base supérieure. Le profilé 31 comprend sur toute sa longueur une aile 37 ayant une section transversale en « L ». L'aile 37 prolonge le profilé 31 vers le bas et forme une gorge ouverte vers le côté intérieur de la caisse. Cette gorge sert à la fixation des feux latéraux réglementaires du véhicule qui sera équipé avec la caisse et permet en même temps d'y loger, et de protéger ainsi, des câbles alimentant les divers feux du véhicule.

La paroi 3 comprend en plus un profilé 32 ayant une section transversale approximativement triangulaire, un profilé 33 ayant la forme d'une tôle légèrement roulée vers l'intérieur de la caisse et un profilé creux 34 formant une des rives latérales de la caisse. Les profilés 31 à 34 sont superposés l'un sur l'autre dans un ordre croissant de leur numéro de référence. De manière analogue, la paroi gauche 4 de la caisse comprend des profilés 41 à 44 dont la forme et la disposition correspondent à celles des profilés 31 à 34 de la paroi droite 3.

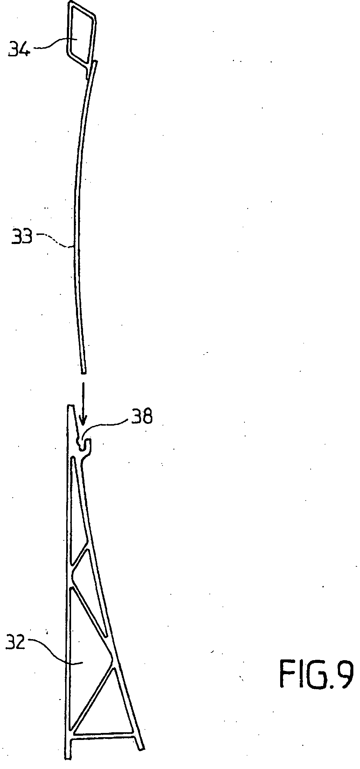

Selon la Figure 3, les profilés 32 et 33, d'une part, et les profilés 33 et 34, d'autre part, se recouvrent partiellement. Selon une variante, le bord supérieur du profilé 32 est pourvu, sur sa face intérieure, d'une gorge 38 destinée à recevoir le bord inférieur de la tôle 33, comme cela est représenté sur la figure 9.

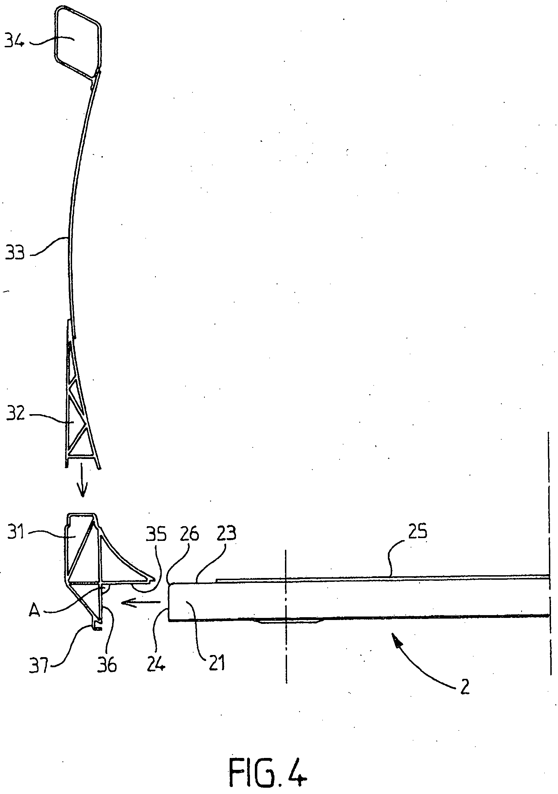

Les traverses 2 sont constituées par des profilés creux allongés ayant des extrémités 21, 22 destinés à être fixés sur la partie inférieure des profilés 31, 41, comme cela est représenté sur les figures 3 et 4. L'extrémité gauche 21 de chacune des traverses 2, et de manière analogue l'extrémité droite 22 de chacune des traverses 2, comprend une surface de soudage supérieure horizontale 23 qui est contiguë au champ 24 de la traverse 2, le champ 24 constituant la seconde de deux surfaces de soudage par laquelle chacune des traverses 2 est fixée sur la paroi 3, à l'autre extrémité des traverses 2, à la paroi 4. Les deux surfaces de soudage contiguës 23, 24 de chacune des traverses 2 se rejoignent, par exemple, sous la forme d'une arête arrondie 26. Toutefois, ces deux surfaces de soudage peuvent également se rejoindre sous la forme d'une arête non arrondie.

De manière complémentaire à la forme des extrémités droite et gauche des traverses 2, la partie inférieure de chacun des profilés 31 et 41 présente deux surfaces de soudage contiguës 35, 36 formant un angle A approximativement droit dans lequel s'insèrent les extrémités correspondantes 21, 22 des traverses 2. Les surfaces de soudage 35, 36 se rejoignent sous la forme d'une gorge dont les dimensions correspondent à celles des surfaces de soudage 23, 24 des extrémités des traverses 2. La forme de cette gorge est complémentaire à celle de l'arête 26 des extrémités des traverses 2, c'est-à-dire arrondie ou non arrondie, selon le cas.

Lors de l'assemblage d'une caisse selon l'invention, les traverses 2 sont insérées, par leur extrémité correspondante, dans l'angle A formé par les surfaces de soudage 35, 36 du profilé 31 de manière telle que la surface de soudage 23 d'une traverse 2 soit mise en regard de la surface de soudage 35 du profilé 31 et que la surface de soudage 24 d'une traverse 2 soit mise en regard de la surface de soudage 36 du profilé 31. La forme arrondie respectivement de l'arête 26 de l'extrémité 21 de la traverse 2 et la forme complémentaire de la gorge formée par les surfaces de soudage 35, 36 du profilé 31 facilitent le soudage par robot de soudage. L'insertion de chacune des traverses 2 dans la partie inférieure du profilé 31 est représentée symboliquement, sur la figure 4, par la flèche horizontale pointée vers la gauche.

Avantageusement, on assemble d'abord les traverses 2 avec les profilés 31 et 41 pour former un premier sous-ensemble de la caisse selon l'invention. Séparément, on assemble les profilés 32 à 34 et les profilés 42 à 44 pour former un deuxième et un troisième sous-ensemble de ladite caisse. Ensuite, on réunit les deuxième et troisième sous-ensembles, par emboîtement, respectivement avec le profilé 31 et le profilé 41 du premier sous-ensemble. Ce procédé de fabrication se poursuit avec l'ajout des paroi avant et paroi arrière. Ainsi, l'assemblage de la caisse selon l'invention est faite d'une manière optimale en ce qui concerne l'utilisation d'un robot de soudage ou, autrement dit, d'une manière à réduire le plus possible le soudage manuel.

La figure 4 indique par ailleurs symboliquement par une flèche verticale l'assemblage du deuxième sous-ensemble par le profilé 32 avec le premier sous-ensemble par le profilé 31. Les profilés 31 et 32 ont, dans les parties destinées à être mises en regard lors de la superposition du profilé 32 au profilé 31, des formes complémentaires pour faire un assemblage par emboîtement, puis par soudage. Lorsque les profilés 31 et 32 sont assemblés, un soudage longitudinal sur chacune des deux faces des profilés ainsi assemblés est effectué par un robot de soudage.

L'assemblage et le soudage, par un robot, des profilés 32, 34 d'une part et 33, 34, d'autre part, s'effectuent de manière analogue à l'assemblage et au soudage des profilés assemblés 31, 32.

La figure 4 montre également que les traverses sont couvertes d'une tôle 25 constituant la surface du fond 1 de la caisse. La tôle 25 ne couvre pas la totalité de la face supérieure des traverses 2, mais présente une largeur réduite afin de laisser découvertes les parties de traverse 2 servant comme surface de soudage 23. Lorsque le profilé 31 est assemblé avec toutes les traverses 2 prévues comme support du fond 1 de la caisse, une soudure longitudinale le long de la jonction du profilé 31 avec la tôle 25 est effectuée par un robot de soudage.

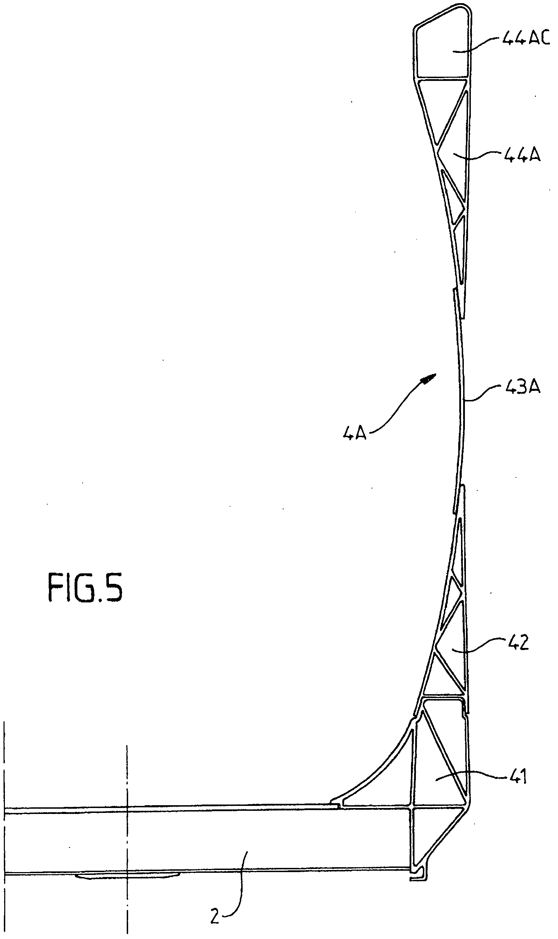

La figure 5 montre une première variante du mode de réalisation de la caisse selon l'invention représenté sur la figure 3. La paroi gauche de la caisse est référencée ici 4A et comprend un profilé 41 et un profilé 42 identique au profilé du même numéro de référence montré sur la figure 3. Le profilé 42 est suivi, vers le haut de la paroi 4A, par un profilé 43A ayant la forme d'une plaque courbée légèrement vers l'intérieur de la caisse, mais de moindre hauteur que le profilé 43 de la figure 3. Le profilé 43A est suivi d'un profilé ayant une partie 44A avec une structure intérieure en treillis comme les profilés 41 et 42, et une partie creuse 44AC constituant une rive latérale de la caisse. Selon une variante de réalisation, la partie creuse 44AC et la partie 44A peuvent être des profilés différents, assemblés par soudage.

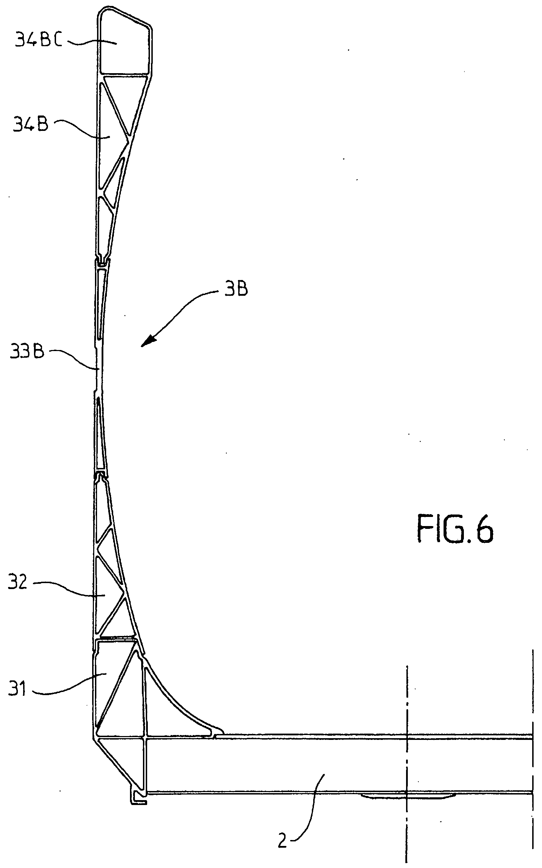

La figure 6 montre une seconde variante du mode de réalisation de la caisse de l'invention représentée sur la figure 3. La paroi droite, référencée ici 3B, comporte un profilé 31 et un profilé 32 identiques aux profilés 31, 32 du mode de réalisation de la figure 3. Le profilé 32 est suivi, vers le haut de la paroi 3B, par un profilé 33B dont une partie centrale, de hauteur limitée, a la forme d'une plaque ou tôle et dont des parties supérieures et inférieures, adjacentes respectivement au-dessus et en dessous de la partie centrale du profilé 33B, présentent une épaisseur croissante du milieu vers les bords respectivement supérieurs et inférieurs du profilé 33B. Le profilé 33B est suivi, vers le haut de la caisse, d'un profilé 34B correspondant approximativement au profilé 44A de la première variante représentée sur la figure 5. Tout comme ce dernier, le profilé 34B comprend une partie creuse 34BC formant une rive latérale de la caisse. Selon une variante de réalisation, la partie creuse 34BC et la partie 34B peuvent être des profilés différents, assemblés par soudage.

Contrairement à ce qui est représenté sur les figures 3 et 5, où les profilés 33, 43 et 43A, sont disposés en recouvrement partiel des parties mises en regard de chacun de ces profilés, la variante selon la figure 6 implique que chacun des profilés formant une paroi latérale présente sur sa ou ses faces destinées à être mises en regard avec une face correspondante d'un profilé adjacent lors de l'assemblage de la paroi, une forme conjuguée par rapport à la forme du profilé adjacent afin de pouvoir être assemblé par emboîtement.

Le mode de réalisation de l'invention représenté sur les figures 3 et 4, d'une part, et les variantes représentées sur les figures 5 et 6, d'autre part, ont en commun que la face intérieure de chacune des parois latérales 3, 4 est légèrement courbée vers l'intérieur autour d'un axe horizontal disposé parallèlement à l'étendue longitudinale de la caisse. Par contre, le mode de réalisation et ses variantes diffèrent les uns des autres par le fait que la face extérieure des parois latérales 3, 4 est légèrement courbée vers l'intérieur de la caisse selon le mode de réalisation représenté sur les figures 3 et 4, alors que cette face est au moins approximativement plane ou entièrement plane selon le mode de réalisation représenté respectivement sur les figures 5 et 6. Quelle que soit la configuration des parois latérales, les parois latérales d'une caisse selon l'invention sont exemptes d'éléments raidisseurs verticaux. La forme seulement légèrement bombée de la face extérieure de la paroi gauche 4 peut être observée aussi sur la figure 7.

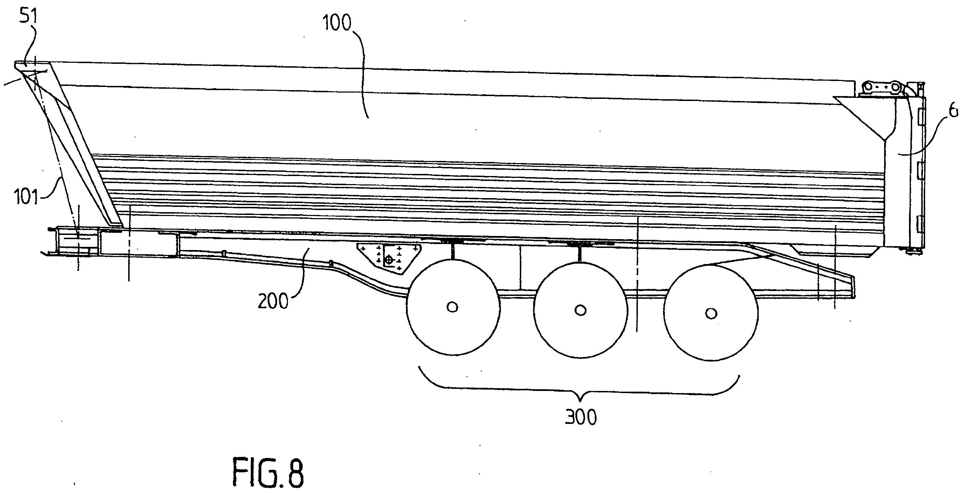

La figure 8 montre une vue latérale d'une caisse 100 selon l'invention, montée sur un châssis 200 et équipée d'un train roulant 300. La caisse 100 est montée sous la forme d'une benne pouvant être élevée moyennant un vérin hydraulique 101 représenté sur la figure 8 par son seul axe symétrique et sur la figure 2 avec ses principaux éléments. Le vérin 101 prend appui, par son extrémité inférieure, sur le châssis 200 et, par son extrémité supérieure, sur la face inférieure de la rive avant 51.

## Revendications

1. Caisse de section transversale essentiellement rectangulaire pour un véhicule industriel, comprenant :
- un fond essentiellement plan comprenant une tôle (25) supporté par des traverses (2) destinées à reposer sur le châssis dudit véhicule ; et,
- deux parois latérales droite et gauche respectivement soudées sur les extrémités correspondantes des traverses, chaque paroi latérale étant formée uniquement par plusieurs profilés longitudinaux superposés assemblés par soudage, le profilé longitudinal inférieur possédant, dans sa partie inférieure, des première et seconde surfaces de soudage (35, 36) contiguës formant un angle (A) approximativement droit dans lequel sont insérées les extrémités correspondantes des traverses, une première surface de soudage (23) d'une extrémité d'une traverse étant soudée à ladite première surface de soudage (35) du profilé inférieur et une seconde surface de soudage (24) de ladite extrémité de ladite traverse étant soudée à ladite seconde surface de soudage (36) du profilé, la tôle (25) présentant une largeur réduite par rapport à la largeur des traverses (2) afin de laisser découvertes les parties de traverse servant comme premières surfaces de soudage à chacune des extrémités d'une traverse.

2. Caisse selon la revendication 1, **caractérisée en ce que** chacune des deux parois latérales (2, 3) comprend un profilé (33, 43) ayant au moins en partie la forme d'une plaque légèrement courbée vers l'intérieur de la caisse.

3. Caisse selon l'une quelconque des revendications 1 ou 2, **caractérisée en ce que** l'ensemble des profilés de chacune des parois latérales (3, 4) présente une face intérieure légèrement courbée vers l'intérieur de la caisse.

4. Caisse selon l'une quelconque des revendications précédentes, **caractérisée en ce que** l'ensemble des profilés de chacune des parois latérales (3, 4) présente une face extérieure approximativement plane et essentiellement perpendiculaire à un plan correspondant au fond (2) de la caisse.

5. Caisse selon l'une quelconque des revendications précédentes, **caractérisée en ce que** le profilé d'une paroi latérale le plus éloigné du fond (2) de la caisse est pourvu d'un profilé creux (34, 44) formant une rive latérale de la caisse.

6. Véhicule industriel comprenant une caisse, **caractérisé en ce que** la caisse est une caisse selon l'une quelconque des revendications 1 à 5.

7. Procédé de fabrication d'une caisse pour un véhicule industriel selon l'une quelconque des revendications 1 à 5, **caractérisé par** les étapes consistant à :
- assembler les traverses à chacune de leurs extrémités avec le profilé correspondant des parois latérales respectivement droite et gauche pour former un premier sous-ensemble,
- assembler séparément les autres profilés de chacune des parois latérales pour former un deuxième et un troisième sous-ensembles,
- réunir les deuxième et troisième sous-ensembles, par emboîtement, avec le profilé correspondant du premier sous-ensemble,
- ajouter les parois avant et arrière.

## Patentansprüche

1. Wagenkasten mit im Wesentlichen rechteckförmigem Querschnitt für ein Industriefahrzeug, enthaltend:
- einen im Wesentlichen flachen Boden mit einem Blech (25), der von Querträgern (2) getragen wird, die dazu bestimmt sind, auf dem Fahrgestell des Fahrzeugs aufzuliegen; und
- zwei Seitenwände, eine rechte und eine linke, die jeweils an den entsprechenden Enden der Querträger angeschweißt sind, wobei jede Seitenwand lediglich aus mehreren Längsprofilen gebildet ist, die aufeinanderliegen und miteinander verschweißt sind, wobei das untere Längsprofil in seinem unteren Bereich eine erste und eine zweite Schweißfläche (35, 36) aufweist, die zusammenhängen und einen annähernd rechten Winkel (A) einschließen, in den die entsprechenden Enden der Querträger eingefügt sind, wobei eine erste Schweißfläche (23) eines Querträgerendes mit der ersten Schweißfläche (35) des unteren Profils verschweißt ist und eine zweite Schweißfläche (24) des genannten Querträgerendes mit der zweiten Schweißfläche (36) des Profils verschweißt ist, wobei das Blech (25) eine gegenüber der Breite der Querträger (2) verminderte Breite aufweist, um die Querträgerbereiche unbedeckt zu lassen, die als erste Schweißflächen an jedem der Enden eines Querträgers dienen.

2. Wagenkasten nach Anspruch 1, **dadurch gekennzeichnet, dass** jede der beiden Seitenwände (2, 3) ein Profil (33,43) aufweist, das zumindest teilweise die Form einer geringfügig nach innerhalb des Wagenkastens gebogenen Platte hat.

3. Wagenkasten nach einem der Ansprüche 1 oder 2, **dadurch gekennzeichnet, dass** die Gesamtheit an Profilen einer jeden der Seitenwände (3, 4) eine geringfügig nach innerhalb des Wagenkastens gebogene Innenseite aufweist.

4. Wagenkasten nach einem der vorangehenden Ansprüche, **dadurch gekennzeichnet, dass** die Gesamtheit an Profilen einer jeden der Seitenwände (3, 4) eine annähernd flache Außenseite aufweist, die im Wesentlichen senkrecht zu einer dem Boden (2) des Wagenkastens entsprechenden Ebene verläuft.

5. Wagenkasten nach einem der vorangehenden Ansprüche, **dadurch gekennzeichnet, dass** das von dem Boden (2) des Wagenkastens am weitesten entfernt liegende Profil einer Seitenwand mit einem Hohlprofil (34, 44) versehen ist, das eine Seitenbegrenzung des Wagenkastens bildet.

6. Industriefahrzeug mit einem Wagenkasten, **dadurch gekennzeichnet, dass** der Wagenkasten ein Wagenkasten nach einem der Ansprüche 1 bis 5 ist.

7. Verfahren zum Herstellen eines Wagenkastens für ein Industriefahrzeug nach einem der Ansprüche 1 bis 5, **gekennzeichnet durch** die Schritte, die darin bestehen,
- die Querträger an jedem ihrer Enden mit dem entsprechenden Profil der Seitenwände, nämlich der rechten bzw. linken, zusammenzufügen, um eine erste Untereinheit zu bilden,
- die weiteren Profil einer jeden der Seitenwände separat zusammenzufügen, um eine zweite und eine dritte Untereinheit zu bilden,
- die zweite und die dritte Untereinheit **durch** Ineinanderstecken mit dem entsprechenden Profil der ersten Untereinheit zu vereinen,
- die Vorder- und die Rückwand hinzuzufügen.

## Claims

1. A body with a substantially rectangular cross-section for an industrial vehicle, comprising:
- a substantially planar bottom comprising a metal plate (25) supported by cross members (2) intended to rest on the chassis of said vehicle; and,
- two right and left side walls welded to the corresponding ends of the cross members respectively, each side wall being formed solely by two or more superimposed and welded longitudinal sections, the lower longitudinal section having, in its lower part, the first and second welding surfaces (35, 36) being joined together while forming an approximately right angle (A) in which the corresponding ends of the cross members are inserted, a first welding surface (23) of one end of a cross member being welded to said first welding surface (35) of the lower section and a second welding surface (24) of said end of said cross member being welded to said second welding surface (36) of the section, the metal plate having a reduced width relative to the width of the cross members (2) so as to leave uncovered the parts of the cross member used as first welding surfaces at each end of a cross member.

2. The body according to claim 1, **characterised in that** each of the two side walls (2, 3) comprises a section (33, 43) having, at least partly, the shape of a plate slightly curved towards the inside of the body.

3. The body according to either of claims 1 or 2, **characterised in that** all sections of each of the side walls (3, 4) have an inner face curved slightly toward the inside of the body.

4. The body according to any of the preceding claims, **characterised in that** all sections of each of the side walls (3, 4) have an outer face that is approximately plane and substantially perpendicular to a plane corresponding to the bottom (2) of the body.

5. The body according to any one of the preceding claims, **characterised in that** the section of a side wall furthest from the bottom (2) of the body is provided with a hollow section (34, 44) forming a lateral edge of the body.

6. An industrial vehicle comprising a body, **characterised in that** the body is a body according to any one of claims 1 to 5.

7. A process for manufacturing a body for an industrial vehicle according to any one of claims 1 to 5, **characterised by** the steps consisting of:
- assembling cross members at each of their ends with the corresponding section of the side walls, right and left respectively, to form a first subassembly,
- separately assembling the other sections of each of the side walls to form a second and a third subassembly,
- uniting the second and third subassemblies, by nesting, with the corresponding section of the first subassembly,
- adding the front and rear walls.
